# EUROPÄISCHE PATENTANMELDUNG

(11) **EP 3 235 375 A1**
(43) Veröffentlichungstag der Anmeldung: **25.10.2017**
(21) Anmeldenummer: 16165906.5
(22) Anmeldetag: 19.04.2016
(51) Int. Cl.: A01K 1/00

(54) **ABTRENNVORRICHTUNG FÜR EINE LIEGEBOX**

(71) Anmelder: Zimmermann PV-Stahlbau GmbH & Co. KG, 88436 Oberessendorf (DE)
(72) Erfinder: Zimmermann, Robert, 88436 Eberhardzell (DE)
(74) Vertreter: Otten, Roth, Dobler & Partner mbB Patentanwälte

(57) **Zusammenfassung**

Vorgeschlagen wird eine Abtrennvorrichtung (1) für eine Liegebox (10), insbesondere für Kühe, mit einem Abtrennbügel (3) als Eingrenzung eines für ein Tier vorgesehen Bereichs mit einem Befestigungspfahl (2) zur Halterung des Abtrennbügels (3). Zur verbesserten Montage ist an einem, insbesondere am bodenseitigen Ende des Befestigungspfahls (2) ein gegenüber dem Befestigungspfahl (2) verkippbarer Fuß (4) vorgesehen, um die Abtrennvorrichtung (1) am Boden zu befestigen und eine Neigung des Befestigungsuntergrundes (11) ausgleichen zu können.

## Beschreibung

Die Erfindung betrifft eine Abtrennvorrichtung für eine Liegebox, insbesondere für Kühe nach dem Oberbegriff des Anspruchs 1. Ferner betrifft die Erfindung eine Liegebox nach dem Oberbegriff des Anspruchs 7 sowie ein Liegeboxensystem nach dem Oberbegriff des Anspruchs 9.

Aus dem Stand der Technik sind Liegeboxen für Kühe in Ställen bekannt. Damit die Tiere dort in geordneter Form für sich alleine liegen können, sind entsprechende Abtrennvorrichtungen vorgesehen, die für jedes einzelne Tier einen Bereich abtrennen. Der Untergrund der Box verläuft in der Regel geneigt, wobei die Neigung so ausgerichtet ist, dass der Eingangsbereich der entsprechenden Einzelbox tiefer liegt.

Aufgabe der Erfindung ist es, eine Abtrennungsvorrichtung für eine Liegebox vorzuschlagen, die eine einfache und schnellere Montage ermöglicht.

Die Aufgabe wird, ausgehend von einer Abtrennvorrichtung, einer Liegebox beziehungsweise einem Liegeboxensystem der eingangs genannten Art, durch die kennzeichnenden Merkmale der Ansprüche 1, 7 beziehungsweise 9 gelöst.

Durch die in den abhängigen Ansprüchen genannten Maßnahmen sind vorteilhafte Ausführungen und Weiterbildungen der Erfindung möglich.

Die erfindungsgemäße Abtrennvorrichtung für eine Liegebox, insbesondere für Kühe, umfasst einen Abtrennbügel als Eingrenzung eines für ein Tier vorgesehenen Bereichs sowie einen Befestigungspfahl zur Halterung des Abtrennbügels. Sie zeichnet sich dadurch aus, dass an einem, insbesondere am bodenseitigen Ende des Befestigungspfahls ein gegenüber dem Befestigungspfahl verkippbarer Fuß vorgesehen ist, um die Abtrennvorrichtung am Boden zu befestigen. Durch die Möglichkeit, den Fuß verkippen zu können, kann eine Neigung des Befestigungsuntergrundes ausgeglichen werden. Durch diese Möglichkeit wird eine schnelle und unkomplizierte Montage ermöglicht. Außerdem kann in vorteilhafterweise eine Anpassung an unterschiedliche Neigungswinkel erfolgen. Insbesondere kann durch die erfindungsgemäße Vorrichtung vermieden werden, dass entweder der Befestigungspfahl abgeschrägt werden muss oder aber eine eigene Halterung für den Befestigungspfahl zu bauen ist. Darüber hinaus können auch aufwendige bauliche Maßnahmen am Untergrund vermieden werden, d.h. es ist z.B. nicht mehr notwendig, den Boden in dem Bereich, in dem der Befestigungspfahl montiert wird, eben zu gestalten, sondern der geneigte Untergrund kann durch die gesamte Liegebox in einem durchgehen. Mit dem Verkippen kann der Winkel genau angepasst werden, ohne dass die Abtrennvorrichtung speziell hierfür konstruiert werden müsste. Es ist daher auch nicht notwendig, den Untergrund zunächst genau zu vermessen, um anschließen eine entsprechende Abtrennvorrichtung bauen zu können, sondern die erfindungsgemäße Abtrennvorrichtung ist somit universeller einsetzbar.

Bei einem vorteilhaften Ausführungsbeispiel der Erfindung ist der Fuß aber nicht nur verkippbar gestaltet, sondern der einmal eingestellte Winkel kann auch derart fixiert werden, dass die Verkippung fest und stabil bleibt und sich nicht löst, wenn sie mechanischen Belastungen ausgesetzt ist. Das Ausführungsbeispiel ist daher so ausgebildet, dass der Fuß gegenüber dem Befestigungspfahl mit einer Schraube abgestützt ist. Die Schraube wiederum ist am Gewinde gelagert, so dass durch Anziehen beziehungsweise Lösen der Schraube der Neigungswinkel zwischen Fuß und Befestigungspfahl einstellbar ist.

Das Verkippen des Fußes gemäß einer Ausführungsvariante der Erfindung kann in einfacher, aber auch stabiler Weise durch eine schwenkbare Lagerung des Fußes gegenüber dem Befestigungspfahl, etwa über einen Bolzen erreicht werden. Der Bolzen kann durch den Fuß als auch durch den Befestigungspfahl durchgehend gelagert werden. Auf dieser Art und Weise kann gegebenenfalls auch ein verschwenkbarer Fuß in einfacher Weise nachgerüstet werden, indem der Befestigungspfahl durchbohrt wird und der Fuß in einem durch die Bohrung gelagerten Bolzen gehaltert wird.

Wird der Befestigungspfahl gemäß einer Ausführungsform der Erfindung als Schiene ausgebildet, so erhält dieser eine besondere Stabilität, weil entsprechende Schienenprofile besonders biegesteif ausgebildet werden können. Darüber hinaus kann durch die Verwendung einer Schiene Material eingespart werden. In Freiräumen innerhalb der Schiene kann auch der Fuß teilweise gelagert werden, sodass auch eine Platzeinsparung ermöglicht wird.

Beispielsweise kann bei einer Weiterbildung der Erfindung der Befestigungspfahl den Fuß teilweise umgreifen, insbesondere dann, wenn der Befestigungspfahl beispielsweise als U-Profil ausgebildet ist. In die sich ergebende Nut des U-Profils kann somit der Fuß eingebracht werden und darin beweglich gelagert sein. Die Breite des Befestigungspfahls kann aber weiterhin gleich bleiben, d.h. sie muss sich nicht durch den Fuß verbreitern. Unteranderem können auch Befestigungspfähle eingesetzt werden, die eine entsprechende Nut aufweisen und z.B. als sogenannte C-Schienen bezeichnet werden.

Um einen besonders stabilen Halt zu gewährleisten, kann der Fuß bei einer Weiterbildung der Erfindung mit einer Bodenplatte versehen sein. Zur Befestigung kann die Bodenplatte am Untergrund aufgebügelt werden. Der Einsatz einer Bodenplatte kann aber auch vermieden werden. Um in diesem Fall einen besonders stabilen Halt zu ermöglichen, kann insbesondere auch der Fuß in einer längeren Form ausgebildet werden und sodann einbetoniert werden. Diese Möglichkeit kann insbesondere vorgesehen werden, wenn der Boden neu verlegt beziehungsweise betoniert wird, während eine Befestigung einer Bodenplatte meist auf ein nachträgliches Anbringen abzielt.

Dementsprechend zeichnet sich eine erfindungsgemäße Liegebox, welche einen geneigten Untergrund aufweist, auf dem das Tier liegen kann, dadurch aus, dass eine Abtrennvorrichtung gemäß der Erfindung beziehungsweise einer Abtrennvorrichtung gemäß einem Ausführungsbeispiel der Erfindung vorgesehen ist. Hierdurch können die bereits genannten Vorteile in gleicher Weise erreicht werden, insbesondere kann die Liegebox schnell und in einfacher Weise montiert werden. Die Liegebox ist dazu ausgebildet, ein Liegebereich abzutrennen, wobei in der Regel jeder Bereich nur für ein einzelnes Tier vorgesehen ist. Der Liegebereich weist eine Zugangsöffnung auf, durch welche das Tier in den Liegebereich eintreten kann.

Insbesondere ist bei einer Ausführungsform der Erfindung der Liegebereich zur Zugangsöffnung hin geneigt. Grundsätzlich ermöglicht diese Neigung, dass in der Liegebox hygienischere Verhältnisse herrschen, weil Flüssigkeiten entlang der Neigung abfließen können. Darüber hinaus kann in einem solchen Bereich ein schöneres Strohbett angerichtet werden. Insbesondere kann gemäß der Erfindung vermieden werden, dass der Untergrund an der Stelle, an welcher der Befestigungspfahl später steht soll, eben verlaufen muss, was in der Regel dadurch realisiert wird, dass beim Verlegen des Bodens eine Kante eingebaut werden muss oder dass sonstige bauliche Maßnahmen notwendig werden, um den Befestigungspfahl anzubringen. Dementsprechend können diese Vorteile aber auch nicht nur für eine einzelne Liegebox, sondern für ein Liegeboxensystem, das eine Anordnung von Liegeboxen vorsieht, genutzt werden, insbesondere in Form einer parallelen Anordnung von Liegeboxen. In der Regel wird in einem Stall ein Liegeboxensystem mit einer je nach Platz und Bedarf gewählten Anzahl von Liegeboxen installiert.

### Ausführungsbeispiel

Ein Ausführungsbeispiel der Erfindung ist in den Zeichnungen dargestellt und wird nachstehend unter Angabe weiterer Einzelheiten und Vorteile näher erläutert.

Im Einzelnen zeigen:
- Figur 1: eine Abtrennvorrichtung gemäß der Erfindung,
- Figur 2: ein schematischer Schnitt durch ein Befestigungspfahl,
- Figur 3: ein schematischer Schnitt durch den Fuß sowie
- Figur 4: eine schematische Darstellung einer Liegebox mit geneigtem Untergrund und Abtrennvorrichtung gemäß der Erfindung.

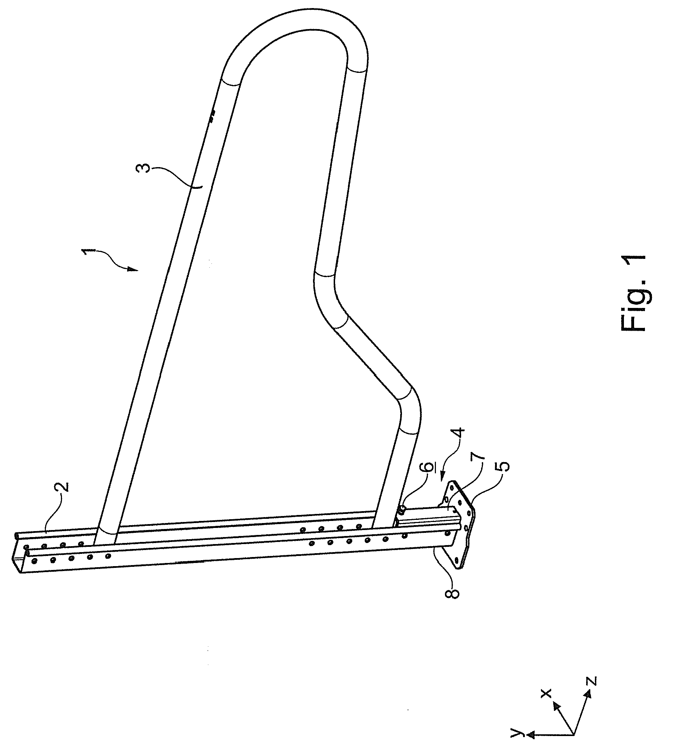

Figur 1 zeigt eine Abtrennvorrichtung 1 mit einem Befestigungspfahl 2, der als C-Schiene ausgebildet ist sowie mit einem Abtrennbügel 3. Im unteren Bereich am Befestigungspfahl befindet sich der Fuß 4, an dem eine Bodenplatte 5 angebracht ist. Der Fuß 4 ist gegenüber dem Befestigungspfahl geneigt dargestellt, wobei die Neigung in Richtung des Abtrennbügels 3 verläuft, sodass Flüssigkeiten in Richtung des Eingangsbereichs fließen können. Die Abstützung des Fußes 4 gegenüber dem Befestigungspfahl 2 erfolgt über eine Schraube 6.

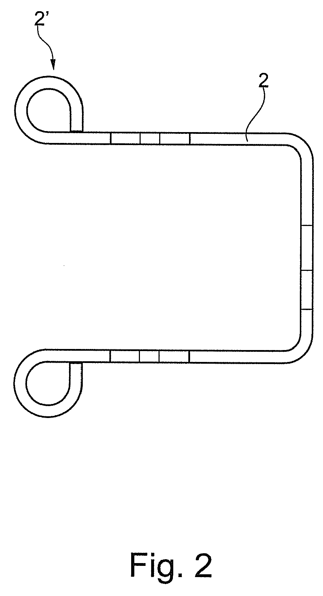

Figur 2 zeigt ein Profil einer C-Schiene 2 aus Figur 1, die zu einer Seite hin geöffnet ist und wobei die Seiten der Nut durch eine Krümmung des Profilbleches im Bereich 2' verstärkt sind.

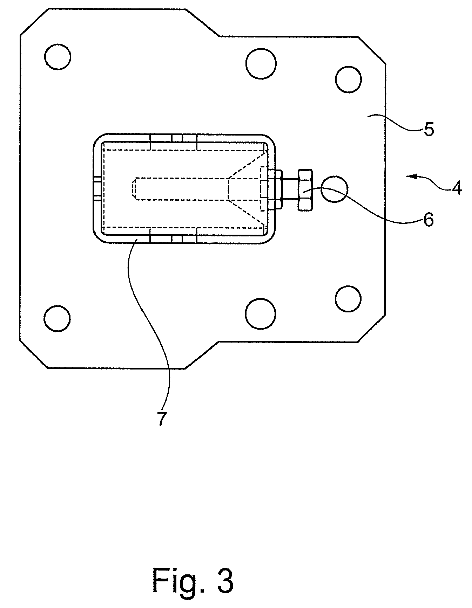

Figur 3 zeigt eine schematische Darstellung des Fußes 4 mit einer Bodenplatte 5. Der Fuß 4 umfasst einen Sockel 7, der hinsichtlich seiner Breite so gewählt ist, dass er in die Nut des Befestigungspfahls 2 in Form einer C-Schiene hineinpasst. Dargestellt ist ebenfalls die Schraube 6, die drehbar im Fuß 4 gelagert ist und mit der eine Abstützung an der C-Schiene 2 erfolgen kann. Diese Abstützung kann in verschiedener Weise erfolgen. Im vorliegenden Fall ist der Sockel 7 zweigeteilt, wobei ein Teil fest mit der C-Schiene verbindbar ist und der andere Teil demgegenüber abgestützt werden kann.

Die Abstützung kann grundsätzlich aber auch so erfolgen, dass die Schraube durch den Sockel 7 hindurchgeht und am Boden der Nut des Befestigungspfahls 2 angreift, oder aber ein Teil des Befestigungspfahls 2 oder des Abtrennbügels 3 greift in den Fuß 4 ein, sodass eine Abstützung hieran erfolgen kann.

Am Boden (kurz über der Bodenplatte) ist der Fuß 4 über einen Bolzen 8 gelagert und somit verschwenkbar.

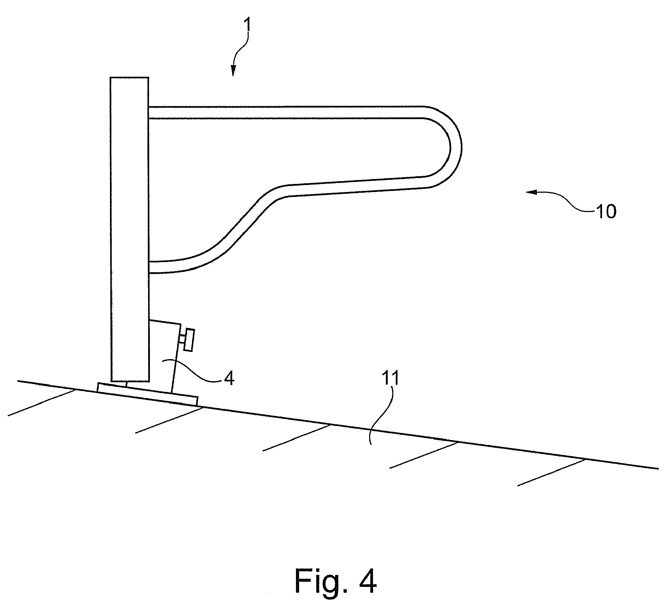

In Figur 4 ist eine Liegebox 10 mit einer Abtrennvorrichtung 1 dargestellt, wobei die Liegebox 10 im Bodenbereich einen geneigten Untergrund 11 aufweist. Über den Fuß 4 bzw. die Bodenplatte 5 ist die Abtrennvorrichtung 1 entsprechend der Neigung des Untergrundes 11 hieran befestigt.

### Bezugszeichenliste:

- 1: Abtrennvorrichtung
- 2: Befestigungspfahl
- 2': Verstärkung
- 3: Abtrennbügel
- 4: Fuß
- 5: Bodenplatte
- 6: Schraube
- 7: Sockel
- 8: Bolzen

- 10: Liegebox
- 11: geneigter Untergrund

## Patentansprüche

1. Abtrennvorrichtung (1) für eine Liegebox (10), insbesondere für Kühe, mit einem Abtrennbügel (3) als Eingrenzung eines für ein Tier vorgesehen Bereichs mit einem Befestigungspfahl (2) zur Halterung des Abtrennbügels (3), **dadurch gekennzeichnet, dass** an einem, insbesondere am bodenseitigen Ende des Befestigungspfahls (2) ein gegenüber dem Befestigungspfahl (2) verkippbarer Fuß (4) vorgesehen ist, um die Abtrennvorrichtung (1) am Boden zu befestigen und eine Neigung des Befestigungsuntergrundes (11) ausgleichen zu können.

2. Abtrennvorrichtung (1) nach einem der vorgenannten Ansprüche, **dadurch gekennzeichnet, dass** der Fuß (4) gegenüber dem Befestigungspfahl (2) mit einer Schraube (6) abgestützt ist, die in einem Gewinde gelagert ist, sodass durch Anziehen und/oder Lösen der Schraube (6) der Neigungswinkel zwischen Fuß (4) und Befestigungspfahl (2) einstellbar ist.

3. Abtrennvorrichtung (1) nach einem der vorgenannten Ansprüche, **dadurch gekennzeichnet, dass** eine Lagerungsvorrichtung zur schwenkbaren Lagerung des Fußes (4) gegenüber dem Befestigungspfahl (2) vorgesehen ist, insbesondere wenigstens ein Bolzen (8), der im Fuß (4) und im Befestigungspfahl (2) gelagert ist.

4. Abtrennvorrichtung (1) nach einem der vorgenannten Ansprüche, **dadurch gekennzeichnet, dass** der Befestigungspfahl (2) als Schiene ausgebildet ist.

5. Abtrennvorrichtung (1) nach einem der vorgenannten Ansprüche, **dadurch gekennzeichnet, dass** der Befestigungspfahl (2) den Fuß (4) wenigstens teilweise umgreift, wobei der Befestigungspfahl (2) insbesondere als C-Schiene ausgebildet ist.

6. Abtrennvorrichtung (1) nach einem der vorgenannten Ansprüche, **dadurch gekennzeichnet, dass** der Fuß eine Bodenplatte (5) zur Befestigung am Boden aufweist.

7. Liegebox (10), welche einen geneigten Untergrund aufweist, auf dem das Tier liegen kann, wobei die Liegebox (10) dazu ausgebildet ist, einen Liegebereich, insbesondere für ein einzelnes Tier, abzutrennen, wobei der Liegebereich eine Zugangsöffnung aufweist, durch welche das Tier in den Liegebereich eintreten kann, **dadurch gekennzeichnet, dass** eine Abtrennvorrichtung (1) nach einem der vorgenannten Ansprüche vorgesehen ist.

8. Liegebox (10) nach einem der vorgenannten Ansprüche, **dadurch gekennzeichnet, dass** der Liegebereich zur Zugangsöffnung hin geneigt ist.

9. Liegeboxensystem mit einer Anordnung, insbesondere einer parallelen Anordnung von Liegeboxen (10) nach einem der vorgenannten Ansprüche.
